# EUROPEAN PATENT APPLICATION

(11) **EP 4 818 475 A1**
(43) Date of publication of application: **07.10.2026**
(21) Application number: 26170470.4
(22) Date of filing: 02.04.2026
(51) Int. Cl.: F01D 25/16, F02C 7/20

(54) **MOUNT BUSHING ASSEMBLIES WITH FLEXIBLE OUTER SLEEVES FOR GAS TURBINE ENGINES**

(30) Priority: 02.04.2025 US 202519098798
(71) Applicant: RTX Corporation, Farmington, CT 06032 (US)
(72) Inventor: DAVIS-AMENDOLA, Kerry Lynn, Farmington, 06032 (US); BOGUE, William, Farmington, 06032 (US); KOZAN, Stuart C., Farmington, 06032 (US)
(74) Representative: Dehns

(57) **Abstract**

A device may include a mount bushing assembly (60) including an inner sleeve (66) having a cylindrical body (72) defined by a radially inner surface (74) and a radially outer surface (76), an outer sleeve (68) positioned outside of the inner sleeve (66), and a rubber component (70) disposed between the radially outer surface (76) and the outer sleeve (68). The device may include a mounting pin (65) received in the inner sleeve (66) and connected to a mounted structure, wherein the outer sleeve (68) includes a strain relieving structure (82) at an outer peripheral surface (80) along the outer sleeve (68), and wherein the rubber component (70) circumscribes at least a portion of the inner sleeve (66).

## Description

### BACKGROUND

This invention relates to gas turbine engines, and more particularly to mount bushing assemblies.

Gas turbine engines typically include a compressor section and a turbine section. The air is compressed in the compressor section. From the compressor section the air is introduced into a combustor section where it is mixed with fuel and ignited in a combustor. Products of this combustion pass downstream over a turbine section to extract energy for driving the compressor section.

Mount bushing assemblies are provided in gas turbine engines to provide vibration dampening and load distribution for gas turbine engine components, including but not limited to, gearboxes.

### SUMMARY

According to an aspect of the present invention, there is provided a gas turbine engine assembly including: a mount bushing assembly positioned, the mount bushing assembly including an inner sleeve having a cylindrical body defined by a radially inner surface and a radially outer surface, an outer sleeve positioned outside of the inner sleeve, and a rubber component disposed between the radially outer surface and the outer sleeve; and a mounting pin received in the inner sleeve and connected to a mounted structure, wherein the outer sleeve includes a strain relieving structure at an outer peripheral surface along the outer sleeve, and wherein the rubber component circumscribes at least a portion of the inner sleeve.

Optionally, and in accordance with the above, the strain relieving structure is a plurality slits that separate the outer sleeve into a plurality of segments.

Optionally, and in accordance with any of the above, the plurality of slits divide the outer sleeve into a first outer sleeve segment, a second outer sleeve segment, a third outer sleeve segment, and a fourth outer sleeve segment, each having an arc shape.

Optionally, and in accordance with any of the above, the rubber does not entirely fill the slits.

Optionally, and in accordance with any of the above, the outer sleeve and the rubber component each include terminal ends that are substantially planar.

Optionally, and in accordance with any of the above, an end portion of the inner sleeve extends axially above, e.g. axially beyond, a terminal end of the outer sleeve and a terminal end of the rubber component.

Optionally, and in accordance with any of the above, an inner surface of the outer sleeve circumscribes a radially outer surface of the rubber component.

Optionally, and in accordance with any of the above, the strain relieving structure includes a spiral groove that follows a helical path between terminal ends of the outer sleeve.

Optionally, and in accordance with any of the above, the strain relieving structure includes a plurality of connected channels arranged in a serpentine pattern.

Optionally, and in accordance with any of the above, the serpentine pattern includes a series of alternating curves that extend circumferentially and longitudinally along the outer surface.

Optionally, and in accordance with any of the above, the connected channels are configured to allow the outer sleeve to extend in a radial direction.

Optionally, and in accordance with any of the above, an outer surface of the outer sleeve is fixed to one of a gearbox and a static structure, and a mounting pin is received in the inner sleeve and fixed to the other one of the gearbox and the static structure.

Optionally, and in accordance with any of the above, the strain relieving structure is a plurality slits that separate the outer sleeve into a plurality of segments.

Optionally, and in accordance with any of the above, the plurality of slits divide the outer sleeve into a first outer sleeve segment, a second outer sleeve segment, a third outer sleeve segment, and a fourth outer sleeve segment, each having an arc shape.

Optionally, and in accordance with any of the above, the rubber does not entirely fill the slits.

Optionally, and in accordance with any of the above, the strain relieving structure includes a plurality of connected channels arranged in a serpentine pattern.

Optionally, and in accordance with any of the above, the strain relieving structure includes a spiral groove that follows a helical path between terminal ends of the outer sleeve.

According to another aspect of the present invention, there is provided a method of assembling a mount bushing assembly including: forming an inner sleeve and an outer sleeve; and forming a rubber component on a radially outer surface of the inner sleeve and the inner surface of the outer sleeve such that the rubber component circumscribes at least a portion of the inner sleeve, wherein forming the rubber component includes molding the rubber component between the inner sleeve and the outer sleeve. wherein an outer periphery of the outer sleeve includes a strain relieving structure.

Optionally, and in accordance with the above, the strain relieving structure is a plurality of slits that separate the outer sleeve into a plurality of outer sleeve segments.

Optionally, and in accordance with any of the above, the strain relieving structure includes one of a spiral groove that follows a helical path between terminal ends of the outer sleeve, or a plurality of connected channels arranged in a serpentine pattern.

The present invention may include any one or more of the individual features disclosed above and/or below alone or in any combination thereof.

The various features and advantages of this invention will become apparent to those skilled in the art from the following detailed description. The drawings that accompany the detailed description can be briefly described as follows.

### BRIEF DESCRIPTION OF THE DRAWINGS

FIG. 1 illustrates an example gas turbine engine.
FIG. 2A schematically illustrates a mount bushing assembly coupled between a platform and a gearbox of the gas turbine engine of FIG. 1.
FIG. 2B shows the mount bushing assembly of FIG. 2A with the platform removed.
FIG. 3A is a perspective view of the mount bushing assembly of FIG. 2.
FIG. 3B shows another possible feature.
FIG. 3C shows a way of achieving the FIG. 3B feature.
FIG. 3D shows an alternative way of achieving the FIG. 3B feature.
FIG. 4 is a perspective view of another exemplary mount bushing assembly.
FIG. 5 is a perspective view of yet another exemplary mount bushing assembly.
FIG. 6 illustrates a flowchart for assembling a mount bushing assembly.
FIG. 7 shows a method of forming a mount bushing assembly.

Like reference numbers and designations in the various drawings indicate like elements.

### DETAILED DESCRIPTION

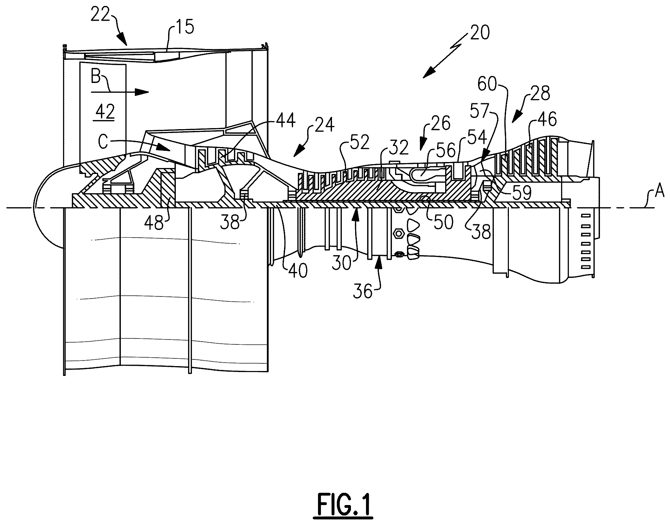

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (102 cm), or more narrowly no more than 75 inches (191 cm). For example, the maximum radius of the fan blades 43 can be between 45 inches and 60 inches (between 114 cm and 152 cm), such as between 50 inches and 55 inches (between 127 cm and 140 cm). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]0.5. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

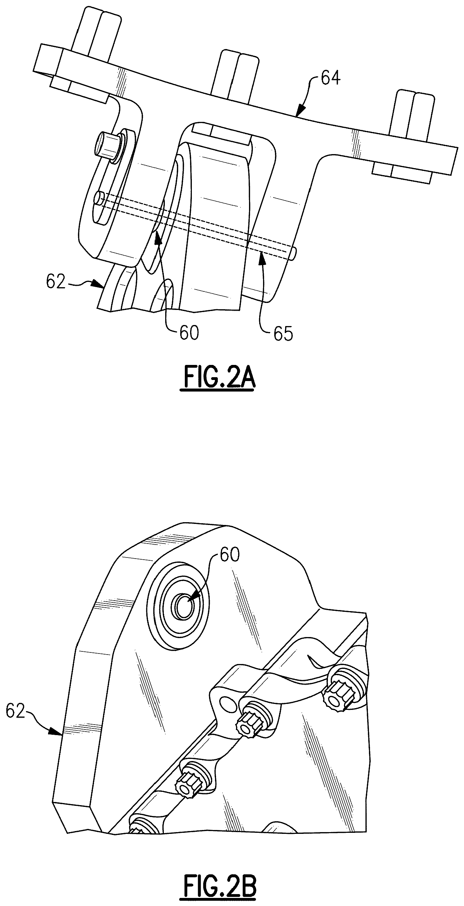

Referring to FIG. 2, with continuing reference to FIG. 1, a mount bushing assembly 60 is illustrated schematically. The mount bushing assembly 60 may be configured to be coupled on one side to a gearbox 62 and on another side to a platform (e.g., an engine mount casing or other static structure) 64 via a mounting pin 65 (shown in dashed lines for illustrative purposes only). In an embodiment, the gearbox 62 is a drive or main gearbox which couples directly with the inner shaft 40 for transferring power to the fan 42. In another embodiment, the gearbox 62 is an auxiliary gearbox which drives various accessories and systems of the engine 20, such as fuel pumps, oil pumps, etc.

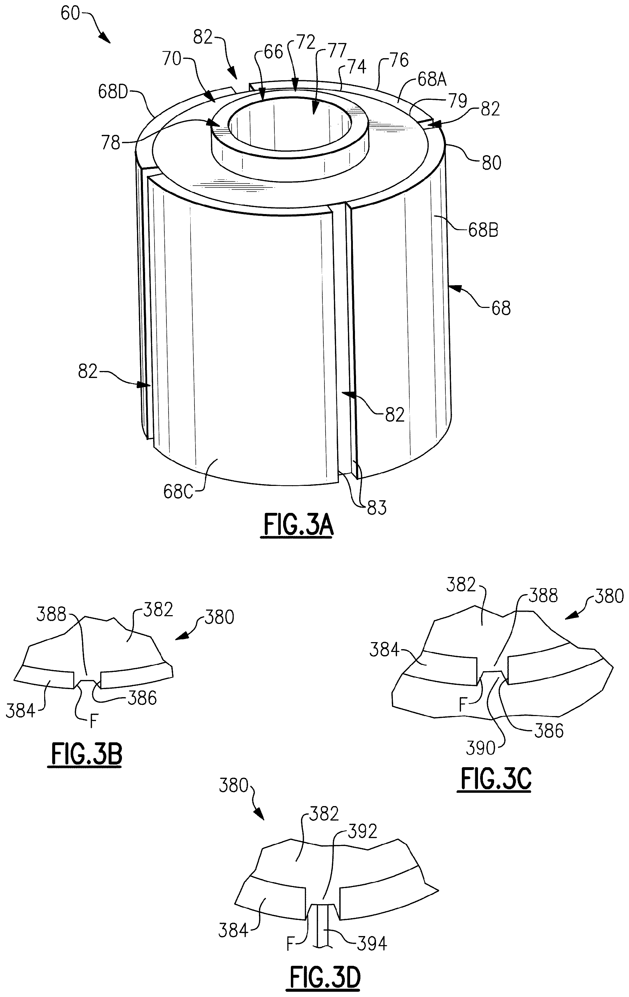

Referring to FIG. 3A, the mount bushing assembly 60 may include an inner sleeve 66, an outer sleeve 68, and a rubber component 70 disposed between the inner sleeve 66 and the outer sleeve 68. The mount bushing assembly 60 is configured to provide vibration dampening to accommodate relative movement between the gearbox 62 and the platform 64 through the mounting pin 65.

The inner sleeve 66 includes a cylindrical body 72 defined by a radially inner surface 74 and a radially outer surface 76. An opening 77 extends through the cylindrical body 72. The opening 77 is configured to receive the mounting pin 65 for securing the mount bushing assembly to the gearbox 62 and the platform 64. In an embodiment, the mounting pin 65 contacts the radially inner surface 74. At least an end portion 78 of the inner sleeve 66 may extend axially above the terminal ends of both the outer sleeve 68 and the rubber component 70 to provide additional structural support and alignment. In an embodiment, the inner sleeve 66 may be made of a metallic material.

The outer sleeve 68 may be positioned outside of the inner sleeve 66 and the rubber component 70. The outer sleeve 68 may include an inner surface 79 and an outer surface 80. The inner surface 79 may be configured to interface with the rubber component 70.

The outer sleeve 68 may include a plurality of slits 82 extending along the length of the outer sleeve 68 such that the outer sleeve 68 is not a complete cylinder. The slits 82 may divide the outer sleeve 68 into a first outer sleeve segment 68A, a second outer sleeve segment 68B, a third outer sleeve segment 68C, and a fourth outer sleeve segment 68D, each having an arc shape. The inner surface 79 of each outer sleeve segment may contact the radially outer surface of the rubber component 70, except for the four portions of the rubber component 70 that remain uncovered due to the spaces defining the slits 82. These uncovered portions correspond to the distances between longitudinal ends 83 of each outer sleeve segment (i.e., the distance between longitudinal ends 83). The spaces between the longitudinal ends 83 may be equal such that all four of the outer sleeve segments are uniformly sized.

The outer sleeve 68 may be made of a ductile metallic material that allows the outer sleeve 68 to be deformed. In an embodiment, the slits 82 may allow the outer sleeve 68 to move radially inward and radially outward in response to an applied force that adjusts the distance between the longitudinal ends 83. This movement allows the outer sleeve 68 to adjust its shape and compress the rubber component 70, which is particularly useful during installation of the mount bushing assembly 60 or when dynamic forces are acting on the mount bushing assembly 60.

The rubber component 70 may be disposed between the radially outer surface 76 of the inner sleeve 66 and the inner surface 79 of the outer sleeve 68 (i.e., the rubber component 70 is sandwiched between the inner sleeve 66 and the outer sleeve 68). In an embodiment, the rubber component 70 may be molded between the inner sleeve 66 and the outer sleeve 68.

The rubber component 70 may circumscribe the entire inner sleeve 66, except for the end portion 78 of the inner sleeve 66 that extends axially above the terminal ends of the rubber component 70 and the outer sleeve 68. In an embodiment, the terminal ends of the rubber component 70 and the terminal ends of the outer sleeve 68 are substantially planar.

The rubber component 70 may be made of a material that is designed to absorb energy and dampen vibrations between the gearbox 62 and the platform 64. For instance, the rubber component 70 may be configured to expand and contract to adapt to dynamic operating conditions. When the rubber component 70 expands, the rubber component 70 pushes radially outward against the inner surface of the outer sleeve segments, which causes the space between the longitudinal ends 83 to widen. That is, the outer sleeve segments are forced apart circumferentially. By encouraging radial expansion, axial strain of the rubber component 70 is limited to prevent debonding between the rubber component 70, the inner sleeve 66, and the outer sleeve 68. When the rubber component 70 contracts, the outer sleeve segments move closer together, which reduces the space between the longitudinal ends 83. This contraction allows the mount bushing assembly 60 to return to its original shape.

FIG. 3B shows another embodiment 380, wherein the rubber 382 is received inwardly of the outer sleeve 384. As shown, rubber 388 extends partially into the slit 386.

FIG. 3C shows a way of achieving the embodiment 380. Here, some mold feature 390 extends into the slit 386 during molding such that the rubber 388 does not extend through the entire length of the slit 386.

FIG. 3D shows an alternative way of forming the embodiment 380. A tool 394 is shown removing the rubber 392 down to the feature 388 as shown in Figure 3B. In some examples, the rubber 392 can be removed mechanically via abrasive blasting.

As shown in each of FIGS. 3B-3D, fillets F of rubber may extend outwardly off a main body.

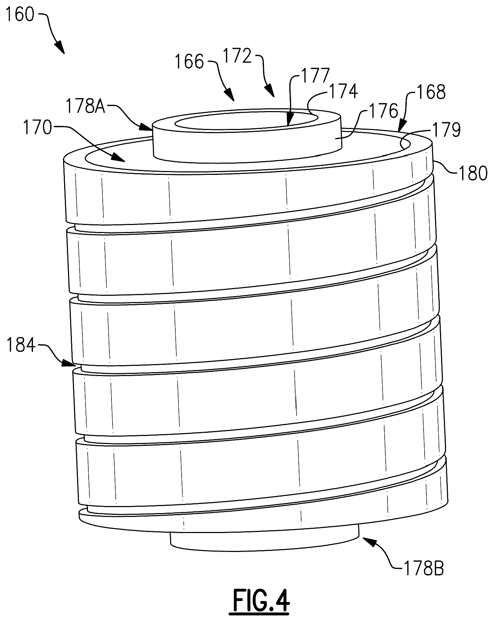

FIG. 4 illustrates another exemplary mount bushing assembly 160. The mounting bushing assembly 160 may be similar to the mounting bushing assembly 60 in that the mount bushing assembly 160 includes an inner sleeve 166, an outer sleeve 168, and a rubber component 170 disposed between the inner sleeve 166 and the outer sleeve 168. However, in this embodiment, the inner sleeve 166 may include a first end portion 178A and an opposite second end portion 178B that extend axially beyond the respective terminal ends of the outer sleeve 168 and the rubber component 170. Furthermore, the inner surface 179 of the outer sleeve 168 may circumscribe the radially outer surface of the rubber component 170 - that is, the inner surface 179 may contact the entire radially outer surface of the rubber component 170. Additionally, the outer sleeve 168 may include an external feature in the form of a spiral groove 184 that extends around its outer surface 180 between its terminal ends such that the outer sleeve 168 is not a complete cylinder. More particularly, the spiral groove 184 may extend from one terminal end of the outer sleeve 168 and follow a helical path to the opposite terminal end of the outer sleeve 168. The spiral groove 184 may have a predetermined pitch defining the spacing between each turn of the spiral. The predetermined pitch is selected to permit axial strain so that the outer sleeve 168 can extend or compress along its length.

The spiral groove 184 allows the outer sleeve 168 to extend and retract in an axial direction in response to an applied force. In an embodiment, when the rubber component 170 expands due to operation loads, the rubber component 170 can push against the inner surface 179 of the outer sleeve 168. The spiral groove 184 enables the outer sleeve 168 to gradually extend along its length. In a further embodiment, when the rubber component 170 contracts, the outer sleeve 168 contracts. By incorporating the spiral groove 184, the outer sleeve 168 has greater flexibility in the axial direction for enhanced energy absorption.

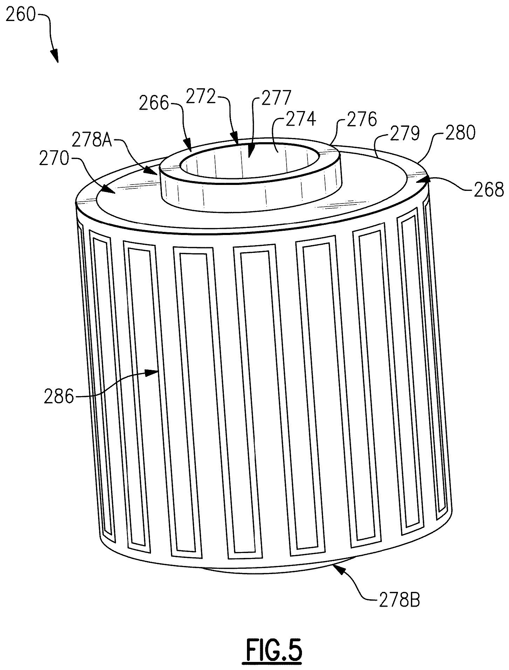

FIG. 5 illustrates another exemplary mount bushing assembly 260. The mount bushing assembly 260 may be similar to the mount bushing assemblies 60, 160 in that the mount bushing assembly 260 may include an inner sleeve 266, an outer sleeve 268, and a rubber component 270 disposed between the inner sleeve 266 and the outer sleeve 268. Like the mount bushing assembly 160, the inner sleeve 266 may include a first end portion 278A and an opposite second end portion 278B that extend axially beyond the respective terminal ends of the outer sleeve 268 and the rubber component 270. Furthermore, the inner surface 279 of the outer sleeve may circumscribe the radially outer surface of the rubber component 270 - that is, the inner surface 279 may contact the entire radially outer surface of the rubber component 270.

However, in this embodiment, the outer sleeve 268 may include an external feature in the form of a plurality of connected channels 286 on its outer surface 280 such that the outer sleeve 268 is not a complete cylinder. The connected channels 286 may be arranged in a serpentine pattern that wraps around the outer sleeve 268 from one terminal end to the other. The serpentine pattern may include a series of alternating curves that extend circumferentially and longitudinally along the outer surface 280. As the connected channels 286 weave back and forth, they form a continuous, interconnected path across the body of the outer sleeve 268. This alternating pattern enables controlled deformation by allowing the outer sleeve 268 to expand and contract circumferentially in response to applied forces.

The connected channels 286 function as a spring mechanism for managing hoop stress through the outer sleeve 268. Because the connected channels 286 form a continuous, serpentine pattern across the outer surface 280, they create localized flex portion that allows the outer sleeve 268 to expand and contract circumferentially in response to applied forces. More specifically, the connected channels 286 may provide circumferential strain relief by allowing the outer sleeve 268 to flex outward (i.e., extend in a radial direction) when subjected to an applied radial force from the rubber component 270. For example, when the rubber component 270 expands, the rubber component 270 pushes radially outward against the inner surface 279 of the outer sleeve 268. The connected channels 286 enable localized stretching so that the outer sleeve 268 can deform outward. Furthermore, when the rubber component 270 contracts, the outer sleeve 268 returns to its original shape.

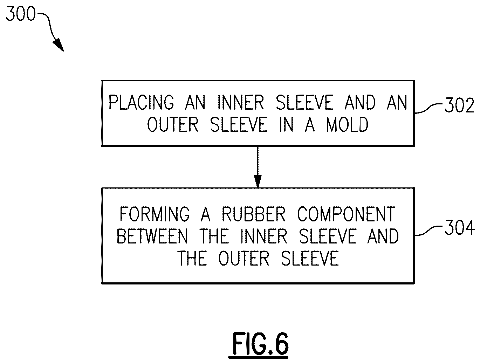

FIG. 6 illustrates an exemplary method 300 for assembling the mount bushing assembly 60. It should be appreciated that the method 300 is equally applicable for assembling the mount bushing assemblies 160 and 260.

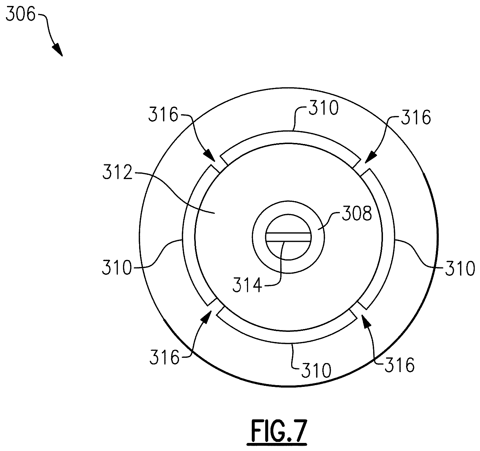

At step 302, an inner sleeve 66 and an outer sleeve 68 are formed using a mold 306 as shown in FIG. 7. The mold 306 includes an inner sleeve cavity 308, a plurality of outer sleeve cavities 310, and a rubber component cavity 312. An inner holder 314 is positioned inward of the inner sleeve cavity 308 to maintain alignment. The outer sleeve cavities 310 are divided into four sections that define the four outer sleeve segments 68A-68D. Protruding members 316 extend between the outer sleeve segment cavities 310 and abut the outer wall of the rubber component cavity 312 to define the slits 82 between the outer sleeve segments. The inner sleeve 66 and the outer sleeve 68 are placed in their respective cavities. The outer sleeve segments 68A-68D are separated by the protruding members 316 of the mold 306.

Alternatively, as discussed above with respect to the mount bushing assemblies 160, 260, the outer surface of the outer sleeve could be formed to include an external feature, such as a spiral groove 184 or a plurality connected channels 286, has been formed in the outer surface of the outer sleeve, instead of the slits 82 prior to molding the rubber component.

At step 304, a rubber component 70 is formed between the inner sleeve 66 and the outer sleeve 68. The rubber component 70 may be molded onto the radially outer surface 76 of the inner sleeve 66 and the inner surface 79 of the outer sleeve 68. In an embodiment, a liquid rubber precursor may be injected into the rubber mold cavity 312 and then the precursor is cured to form the rubber component 70 having a bonded interface with the inner sleeve 66 and the outer sleeve 68. As discussed above, the rubber component 70 contacts the entire radially outer surface 76 of the inner sleeve 66, except for an end portion 78 that extends axially above a terminal end of the rubber component 70.

In an embodiment, any excess rubber of the rubber component 70 that accumulated in the slits 82 after the step 304 can be removed mechanically using methods such as blasting, Scotch-Brite abrasion, or a scraper. This removing step ensures that the slits 82 remain unobstructed so that the outer sleeve segments 68A-68D can move as intended while maintaining proper fit relative to the gearbox 62.

However, as shown in FIG. 3B-3D, some rubber may remain in the slits.

The outer sleeve embodiments of FIGS. 3-5 could all be said to have outer surfaces with a strain relieving structure (e.g., a plurality of slits, a spiral groove, or a plurality of connected channels).

Although the different examples have the specific components shown in the illustrations, embodiments of this invention are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present invention.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason, the appended claims should be studied to determine true scope and content.

## Claims

1. A gas turbine engine assembly comprising:
a mount bushing assembly (60; 160; 260) including an inner sleeve (66; 166; 266) having a cylindrical body (72; 172; 272) defined by a radially inner surface (74; 174; 274) and a radially outer surface (76; 176; 276), an outer sleeve (68; 168; 268) positioned outside of the inner sleeve (66; 166; 266), and a rubber component (70; 170; 270) disposed between the radially outer surface (76; 176; 276) and the outer sleeve (68; 168; 268); and
a mounting pin (65) received in the inner sleeve (66; 166; 266) and connected to a mounted structure (62, 64),
wherein the outer sleeve (68; 168; 268) includes a strain relieving structure at an outer peripheral surface (80; 180; 280) along the outer sleeve (68; 168; 268), and
wherein the rubber component (70; 170; 270) circumscribes at least a portion of the inner sleeve (66; 166; 266).

2. The assembly as recited in claim 1, wherein the outer sleeve (68; 168; 268) and the rubber component (70; 170; 270) each include terminal ends that are substantially planar.

3. The assembly as recited in claim 2, wherein an end portion (78; 178A; 278A) of the inner sleeve (66; 166; 266) extends axially above a terminal end of the outer sleeve (68; 168; 268) and a terminal end of the rubber component (70; 170; 270).

4. The assembly as recited in any preceding claim, wherein the strain relieving structure is a plurality of slits (82) that separate the outer sleeve (68) into a plurality of segments (68A, 68B, 68C, 68D).

5. The assembly as recited in claim 4, wherein the plurality of slits (82) divide the outer sleeve (68) into a first outer sleeve segment (68A), a second outer sleeve segment (68B), a third outer sleeve segment (68C), and a fourth outer sleeve segment (68D), each having an arc shape.

6. The assembly as recited in claim 4 or 5, wherein the rubber component (70) does not entirely fill the slits (82).

7. The assembly as recited in claim 1, 2, or 3, wherein an inner surface (179; 279) of the outer sleeve (168; 268) circumscribes a radially outer surface of the rubber component (170; 270).

8. The assembly as recited in claim 7, wherein the strain relieving structure includes a spiral groove (184) that follows a helical path between terminal ends of the outer sleeve (168).

9. The assembly as recited in claim 7, wherein the strain relieving structure includes a plurality of connected channels (286) arranged in a serpentine pattern.

10. The assembly as recited in claim 9, wherein the serpentine pattern includes a series of alternating curves that extend circumferentially and longitudinally along the outer peripheral surface (280).

11. The assembly as recited in claim 9 or 10, wherein the connected channels (286) are configured to allow the outer sleeve (268) to extend in a radial direction.

12. The assembly as recited in any preceding claim, wherein the outer peripheral surface (80; 180; 280) of the outer sleeve (68; 168; 268) is fixed to one of a gearbox (62) and a static structure (64), and the mounting pin (65) is fixed to the other one of the gearbox (62) and the static structure (64).

13. A method of assembling a mount bushing assembly (60; 160; 260), the method comprising:
forming an inner sleeve (66; 166; 266) and an outer sleeve (68; 168; 268); and
forming a rubber component (70; 170; 270) on a radially outer surface (76; 176; 276) of the inner sleeve (66; 166; 266) and an inner surface (79; 179; 279) of the outer sleeve (68; 168; 268) such that the rubber component (70; 170; 270) circumscribes at least a portion of the inner sleeve (66; 166; 266), wherein forming the rubber component (70; 170; 270) includes molding the rubber component (70; 170; 270) between the inner sleeve (66; 166; 266) and the outer sleeve (68; 168; 268),
wherein an outer periphery (80; 180; 280) of the outer sleeve (68; 168; 268) includes a strain relieving structure.

14. The method as recited in claim 13, wherein the strain relieving structure is a plurality of slits (82) that separate the outer sleeve (68; 168; 268) into a plurality of outer sleeve segments (68A).

15. The method as recited in claim 13, wherein the strain relieving structure includes:
a spiral groove (184) that follows a helical path between terminal ends of the outer sleeve (168); or
a plurality of connected channels (286) arranged in a serpentine pattern.
